# DEMANDE DE BREVET EUROPEEN

(11) **EP 2 756 749 A1**
(43) Date de publication de la demande: **23.07.2014**
(21) Numéro de dépôt: 14305045.8
(22) Date de dépôt: 13.01.2014
(51) Int. Cl.: A01D 84/00, A01D 57/20

(54) **Machine de fenaison comportant un déflecteur perfectionné**

(30) Priorité: 17.01.2013 FR 1350393
(71) Demandeur: KUHN S.A., 67700 Saverne (FR)
(72) Inventeur: Gantzer, M. Christian, 57915 WOUSTVILLER (FR)
(74) Mandataire: Nuss, Laurent

(57) **Abrégé**

La présente invention concerne une machine de fenaison comportant un dispositif de récolte (4) comportant un rotor (8) animé autour d'un axe horizontal et perpendiculaire à une direction d'avancement au travail, des dents (10) dont des pointes (11) décrivent une enveloppe courbe lorsque le rotor (8) tourne autour dudit axe, et un convoyeur (12) déplaçant les végétaux transversalement à la direction d'avancement, la machine comportant un déflecteur (32) relié à un bras (33) relié au dispositif de récolte (4) au moyen d'une articulation (35), autour de laquelle le bras (33) peut pivoter entre une première position dans laquelle le déflecteur (32) est disposé, au travail, à côté et à distance d'une extrémité latérale (38) du dispositif de récolte (4), et une deuxième position.

Selon l'invention, dans la deuxième position et en considérant la machine au travail, le déflecteur (32) et le bras (33) s'étendent à plat et au moins partiellement au-dessus du dispositif de récolte (4).

## Description

La présente invention se rapporte à une machine de fenaison comportant au moins un dispositif de ramassage et de déplacement de végétaux comportant un rotor pouvant être animé autour d'un axe de rotation sensiblement horizontal et sensiblement perpendiculaire à une direction d'avancement de la machine en position de travail, des dents avec des pointes de dents décrivant une enveloppe courbe lorsque le rotor est animé autour dudit axe de rotation, et un convoyeur qui déplace les végétaux transversalement à la direction d'avancement.

Une première machine de ce type est connue du document US 2004/0200203. Sur cette machine, les végétaux déplacés par le convoyeur en direction d'un côté latéral du dispositif de ramassage et de déplacement, peuvent, lorsqu'ils retombent sur le sol, former un andain mal délimité et/ou irrégulier. Ceci se produit notamment lorsque les végétaux présents au sol sont ramassés par le rotor en un flux irrégulier dû, par exemple, à des variations de densité ou de volume des végétaux repris par le rotor.

Il est par ailleurs connu du document FR 2 678 804, une deuxième machine du type andaineur dont le dispositif de ramassage et de déplacement comporte un rotor à dents pouvant être animé autour d'un axe de rotation vertical. Ce rotor repose sur le sol au moyen d'un train de roues placé sous le rotor. Ce rotor est porté par un bâti conçu pour être attelé à un tracteur de sorte qu'au travail, le bâti est abaissé afin que les roues reposent au sol, tandis que pour le transport notamment, le bâti est relevé, le train de roues demeurant sensiblement parallèle au sol. Au bâti est articulée une extrémité d'un bras télescopique portant à son autre extrémité un déflecteur pour former un andain. Dans une première position du bras utilisée pour le travail, le déflecteur s'étend verticalement sur un côté latéral du rotor et à quelque distance de celui-ci. Dans une deuxième position du bras utilisée pour le transport de la machine, le bras est replié à la verticale de sorte que le déflecteur s'étende sensiblement à l'horizontale au-dessus du bâti à une distance de celui-ci voisine de la longueur du bras. De ce fait, l'encombrement vertical de la machine est important lorsque le bras se trouve dans la deuxième position. Le centre de gravité de la machine s'en trouve élevé, au détriment de la stabilité de la machine, notamment au transport. En outre, une conception du déflecteur et du bras conforme à celle de cette deuxième machine connue trouve difficilement son application sur la première machine connue du document US 2004/0200203. En effet, cette dernière comporte plusieurs dispositifs de ramassage et de déplacement comprenant chacun un rotor horizontal et un convoyeur placé en aval, en vue d'obtenir une largeur de travail importante, comprise par exemple entre six et douze mètres. Afin de respecter les normes de gabarit routier, les dispositifs de ramassage et de déplacement placés latéralement par rapport au châssis de la machine, sont repliés vers le haut pour le transport, en l'occurrence dans une position située au-delà de la verticale. L'emploi d'un déflecteur et d'un bras conformes à ceux de la deuxième machine connue, portés par un bâti de l'un de ces dispositifs de ramassage et de déplacement latéraux, poserait un problème d'encombrement lorsque le bras est placé dans la deuxième position au-dessus dudit dispositif et que ce dernier est replié vers le haut par rapport au châssis. Dans ce cas en effet, l'encombrement dudit dispositif serait important dans une direction perpendiculaire à la direction d'avancement de la première machine connue. Dans le cas de dispositifs de ramassage et de déplacement disposés, au travail, sensiblement côte à côte, de part et d'autre du châssis, la largeur totale de cette première machine serait alors importante dans la position repliée vers le haut desdits dispositifs. Une réduction de cette largeur totale pourrait être obtenue moyennant un décalage des dispositifs de ramassage et de déplacement dans la direction d'avancement. Ceci conduirait néanmoins à une augmentation significative de l'encombrement longitudinal de la machine. Des cinématiques élaborées de repliement des dispositifs de ramassage et de déplacement vers le haut pourraient être envisagées pour compenser l'encombrement du déflecteur et du bras dans la deuxième position, au prix toutefois d'une machine fort complexe et onéreuse.

Une troisième machine est connue du document US 4 748 803. Il s'agit d'une machine de fenaison traînée attelable à l'arrière d'un tracteur et comportant un châssis dont la partie arrière repose sur le sol au moyen de roues. Entre celles-ci s'étend un dispositif de ramassage et de déplacement comportant un organe de ramassage du type pick-up et un convoyeur placé en arrière du pick-up, vu dans une direction d'avancement de la machine. Le dispositif de ramassage et de déplacement demeure sensiblement parallèle au sol que la machine soit dans une position de travail ou dans une position de transport. Un bras portant un déflecteur est articulé au châssis au moyen d'un pivot vertical placé à l'arrière du convoyeur. Dans une première position du bras utilisée pour le travail, le déflecteur s'étend à quelque distance d'un côté latéral du convoyeur. Le déflecteur reçoit alors les végétaux déplacés latéralement par le convoyeur, afin de former un andain. Dans une deuxième position du bras utilisée pour le transport de la machine, le bras est pivoté vers l'arrière autour du pivot vertical. Dans cette deuxième position, le déflecteur s'étend à l'arrière du dispositif de ramassage et de déplacement et à l'arrière du châssis, et vient donc augmenter l'encombrement longitudinal de la machine de façon significative. Cette conception ne permet pas d'obtenir une machine compacte pour le transport. De plus, dans cette deuxième position du bras, le déflecteur faisant saillie à l'arrière du châssis est fortement exposé aux chocs.

La présente invention a pour but de proposer une machine de fenaison qui ne présente pas les inconvénients précités. La machine selon l'invention permet la formation d'un andain régulier et bien délimité. De plus, elle est susceptible de présenter une largeur de travail importante tout en conservant, pour les manoeuvres et pour le transport, un gabarit réduit et un centre de gravité bas favorable à la stabilité. Enfin, l'invention fait appel à des moyens techniques relativement simples et peu onéreux.

Ce but est atteint par une machine de fenaison selon la revendication 1.

La machine selon l'invention peut comporter un seul dispositif de ramassage et de déplacement porté par un bâti. Dans ce cas, en position de travail et en position de transport de la machine, le bâti repose sur le sol au moyen de roues tandis que le dispositif de ramassage et de déplacement s'étend sensiblement parallèlement au sol. La machine selon l'invention présente alors une hauteur réduite et un centre de gravité bas dans la deuxième position du bras. Dans cette deuxième position, le bras et le déflecteur sont peu exposés aux chocs éventuels avec des obstacles sur les côtés ou à l'arrière de la machine. En sus, un accroissement de la longueur de la machine peut être évité lorsque le bras est déplacé de la première position vers la deuxième, d'où une maniabilité préservée.

La machine selon l'invention peut aussi comporter plusieurs dispositifs de ramassage et de déplacement reliés à un châssis central, notamment deux dispositifs latéraux ou bien un dispositif central complété par deux dispositifs latéraux. Ces dispositifs sont par exemple alignés les uns à côté des autres en position de travail de la machine. En position de transport ou pour les manoeuvres, les dispositifs latéraux sont repliés vers le haut. L'invention permet d'opérer ce repliement vers le haut sans risque de voir le déflecteur et/ou le bras entrer en collision avec un dispositif de ramassage et de déplacement voisin, ou encore avec le châssis central. De la sorte, les dispositifs de ramassage et de déplacement latéraux peuvent être fortement rapprochés l'un vers l'autre, ou vers le châssis central, en vue d'obtenir une largeur et/ou une hauteur réduite en position de transport de la machine.

D'autres caractéristiques et avantages de l'invention ressortiront de la description ci-après avec référence aux dessins annexés qui représentent un exemple non limitatif de réalisation de la machine selon l'invention.

Sur ces dessins :
- la figure 1 représente une vue en perspective d'un exemple de réalisation d'une machine selon l'invention, dans une première orientation;
- la figure 2 représente une vue en perspective de l'exemple de réalisation, dans une deuxième orientation;
- la figure 3 représente une vue en perspective d'une partie de l'exemple de réalisation, dans la première position du bras ;
- la figure 4 représente une vue en perspective d'une partie de l'exemple de réalisation, dans la deuxième position du bras ;
- la figure 5 représente une vue en perspective d'une partie de l'exemple de réalisation, dans une position du bras située entre les première et deuxième positions ;
- la figure 6 représente une vue en perspective d'une partie de l'exemple de réalisation, le bras étant dans la première position et le déflecteur partiellement replié.

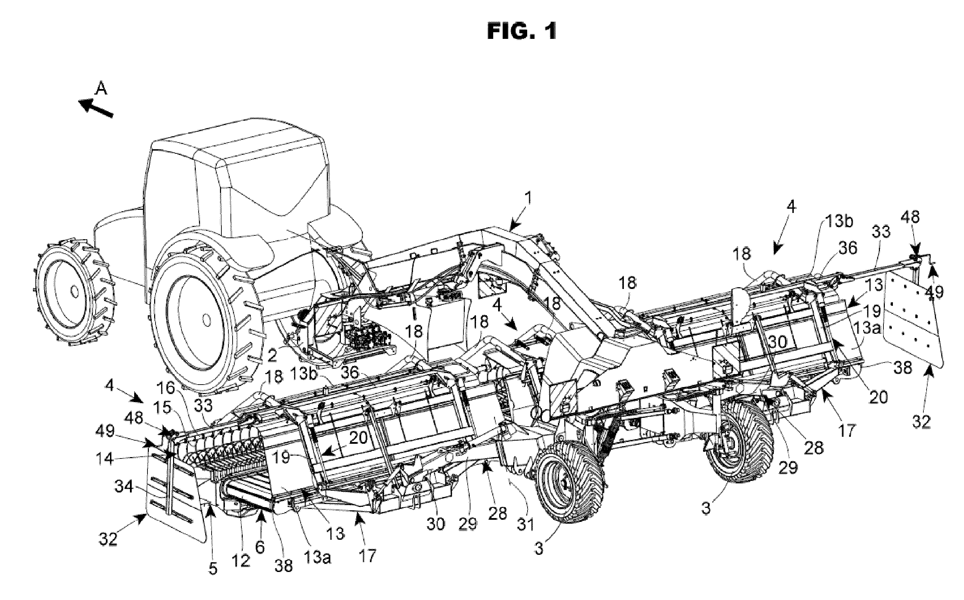

La machine agricole selon l'invention illustrée à la figure 1 comporte un châssis (1). Ce châssis (1) comporte une poutre longitudinale plus ou moins centrale. Celle-ci porte à son extrémité frontale un dispositif d'accouplement (2). Ce dernier permet de relier le châssis (1) à un tracteur afin de déplacer la machine dans une direction d'avancement (A). Une prise de force du tracteur assure l'animation des différents organes de travail de la machine. La partie arrière du châssis (1) comporte un train de roues (3) en contact avec le sol. Dans la description qui suit, les termes « gauche », « droite », « frontal », « avant », « arrière », « postérieur » se rapportent à la direction d'avancement (A), et les termes « supérieur », « haut » et « dessus » sont définis par rapport au sol.

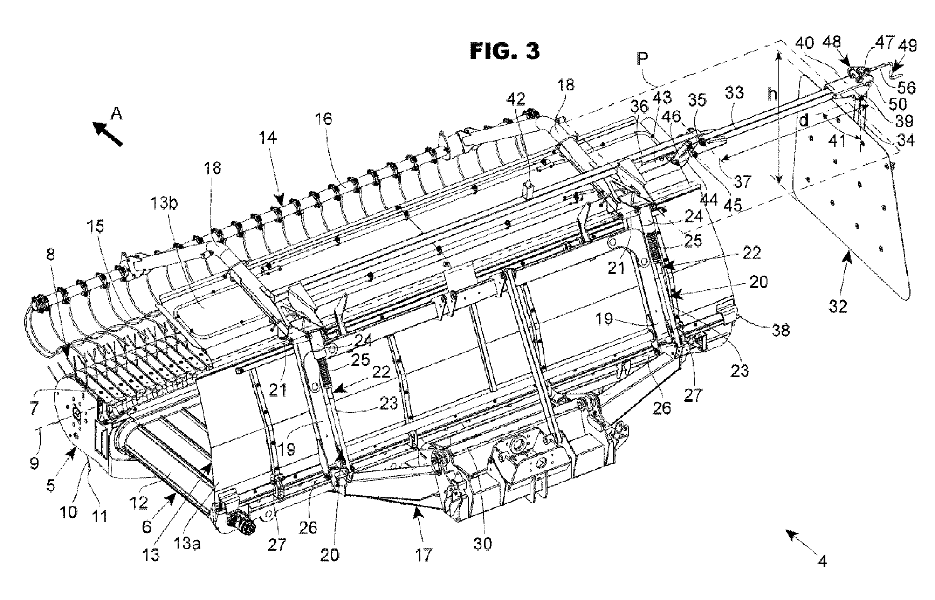

La machine comporte au moins un dispositif de ramassage et de déplacement (4) de végétaux. Ainsi qu'il ressort de la figure 1, ce dispositif de ramassage et de déplacement (4) est, relativement à la direction d'avancement (A), situé entre le dispositif d'accouplement (2) et le train de roues (3). Le dispositif de ramassage et de déplacement (4) comporte un organe de ramassage (5) et un organe de déplacement (6). Tel qu'illustré notamment à la figure 3, l'organe de ramassage (5) comporte une surface de guidage (7) courbée et un rotor (8). Le rotor (8) peut être animé autour d'un axe de rotation (9) dans le sens antihoraire, vu depuis la droite du dispositif de ramassage et de déplacement (4). Dans une position de travail de la machine, cet axe de rotation (9) est sensiblement horizontal et sensiblement perpendiculaire à la direction d'avancement (A). L'organe de ramassage(5) comporte également des dents (10) qui ramassent les végétaux au niveau du sol, les soulèvent et les projettent vers l'arrière. Les dents (10) comportent des pointes de dents (11) qui décrivent une enveloppe courbe lorsque le rotor (8) est animé autour de l'axe de rotation (9). Les dents (10) émergent au moins partiellement de la surface de guidage (7). Dans l'exemple de réalisation des figures, l'organe de ramassage (5) est du type pick-up, dont les dents (10) sont portées par le rotor (8) et émergent de la surface de guidage (7) formée par une multitude de lames courbées autour du rotor (8) et placées les unes à côté des autres suivant l'axe de rotation (9). Les dents (10) se déplacent entre ces lames. Dans cet exemple de réalisation, la surface de guidage (7) est fixe. Les dents (10) sont commandées de telle sorte que l'enveloppe courbe décrite par le déplacement des pointes de dents (11) n'est pas cylindrique. En effet, les dents (10) s'escamotent à l'intérieur de la surface de guidage (7) lorsqu'elles approchent d'une extrémité supérieure et postérieure de la surface de guidage (7). De cette manière, les dents (10) libèrent progressivement les végétaux qui approchent de l'organe de déplacement (6). Un tel déplacement des dents (10) est obtenu au moyen par exemple d'un chemin de came fixe à l'intérieur duquel se déplacent des galets portés par des cames reliées aux dents (10). Alternativement, des dents (10) non commandées sont aussi envisageables. Dans ce cas, l'enveloppe courbe décrite par les pointes de dents (11) est un cylindre centré sur l'axe de rotation (9) du rotor (8). D'autres formes de réalisation de l'organe de ramassage (5), non représentées, restent possibles. Ce dernier peut ainsi comporter une bande souple enroulée autour d'un premier rotor placé à l'avant de l'organe de ramassage (5) et autour d'un deuxième rotor placé plus en arrière. Ce deuxième rotor peut notamment être placé, en position de travail de la machine, à une distance du sol plus élevée que le premier rotor, de manière à ce que l'organe de ramassage (5) déplace les végétaux vers l'arrière et vers le haut en direction de l'organe de déplacement (6). Une telle bande comporte des dents, des fourches ou des crochets qui peuvent être fixés ou articulés à la bande. Dans cette forme de réalisation, la surface de guidage (7) est constituée par la surface de la bande en contact avec les végétaux. La surface de guidage (7) est dans ce cas animée. L'axe de rotation (9) du rotor (8) est celui du premier rotor.

L'entraînement de l'organe de ramassage (5) est réalisé au moyen de tout organe approprié. Il peut s'agir d'un moteur hydraulique ou électrique, lequel moteur peut être logé à l'intérieur du rotor (8) ou bien dépasser latéralement de celui-ci. L'organe de ramassage (5) peut également être animé au moyen d'une chaîne ou d'une courroie, ou encore d'une cascade de pignons. Une combinaison de tels moyens est aussi possible.

L'organe de déplacement (6) des végétaux ramassés se situe à l'arrière et à proximité de l'organe de ramassage (5) de sorte qu'il reçoive les végétaux projetés vers l'arrière par celui-ci. Cet organe de déplacement (6) comporte un convoyeur (12) qui déplace les végétaux transversalement à la direction d'avancement (A). Dans l'exemple de réalisation des figures, le convoyeur (12) est un convoyeur à bande. Cette bande est enroulée autour de deux cylindres placés aux extrémités latérales du convoyeur (12), entre lesquels cylindres s'étend une surface transporteuse de la bande en contact avec les végétaux. Ces cylindres peuvent tourner autour d'axes orientés, en position de travail de la machine, sensiblement dans la direction d'avancement (A). Au moins l'un de ces cylindres est entraîné durant le travail de sorte que les végétaux reçus de l'organe de ramassage (5) soient redéposés au sol sous la forme d'un andain en vue de leur reprise ultérieure. Sur le côté arrière de l'organe de déplacement (6) est disposée une paroi (13) qui comporte une portion (13a) sensiblement verticale pour limiter la projection vers l'arrière des végétaux. La paroi (13) peut également comporter une autre portion (13b) sensiblement horizontale pour limiter les projections de végétaux vers le haut. Ainsi qu'il ressort notamment des figures 1 et 3, cette autre portion (13b) est placée dans la continuité de la portion sensiblement verticale, au-dessus du convoyeur (12) à bande. L'organe de déplacement (6) peut aussi être un convoyeur à rouleaux, ces derniers étant par exemple montés sur des axes de rotation orientés, en position de travail de la machine, sensiblement dans la direction d'avancement (A). De tels rouleaux sont de préférence placés les uns à côté des autres et à faible distance les uns des autres, et peuvent être animés de telle sorte que les végétaux soient déplacés transversalement à la direction d'avancement (A).

L'entraînement de l'organe de déplacement (6), par exemple du convoyeur (12) à bande ou à rouleaux, est réalisé au moyen de tout organe convenable. Il peut s'agir d'un moteur hydraulique ou électrique. Une animation au moyen d'une chaîne ou d'une courroie, ou encore d'une cascade de pignons, est aussi envisageable. Une combinaison de tels moyens est bien entendu possible. Ces moyens peuvent être actionnés dans un sens de fonctionnement ou dans l'autre. Notamment dans le cas d'un convoyeur (12) à bande ou à rouleaux, les végétaux peuvent de la sorte être transférés vers le côté gauche ou le côté droit de la machine, par exemple pour former un andain d'un côté ou de l'autre.

Le dispositif de ramassage et de déplacement (4) comporte également un dispositif de guidage (14) des végétaux. Ainsi qu'il apparaît notamment à la figure 3, ce dispositif de guidage (14) est situé au moins partiellement au-dessus et à distance réduite de l'organe de ramassage (5). Le dispositif de guidage (14) comporte des tiges (15) souples qui sont sensiblement parallèles entre elles et qui s'étendent depuis l'avant de l'organe de ramassage (5) vers l'arrière. Au travail, les végétaux ramassés par les dents (10) du rotor (8) viennent en contact avec les tiges (15) et glissent le long de celles-ci vers l'arrière. Ces tiges (15) maintiennent en sus les végétaux en prise avec les dents (10). Les tiges (15) du dispositif de guidage (14) sont fixées sur une barre (16). Elles comportent chacune une partie ressort formée par exemple par un enroulement en forme de spire du fil métallique qui compose la tige (15). Chaque partie ressort est enfilée sur la barre (16) et tenue par un boulon. Outre une multitude de tiges (15) souples juxtaposées, le dispositif de guidage (14) peut être formé par une tôle courbée s'étendant depuis l'avant de l'organe de ramassage (5) vers l'arrière. Une combinaison de tiges (15) souples et d'une ou plusieurs tôles est envisageable. Le dispositif de guidage (14) peut aussi comporter au moins un rouleau frontal monté à pivotement autour d'un axe s'étendant, en position de travail de la machine, sensiblement perpendiculairement à la direction d'avancement (A). Ce rouleau peut tourner autour dudit axe de manière libre ou animée au moyen d'un actionneur, tel un moteur. L'extrémité frontale du dispositif de guidage (14) est alors constituée par le rouleau. En arrière du rouleau s'étendent par exemple des tiges souples, une tôle, ou une combinaison de ces éléments.

Le dispositif de ramassage et de déplacement (4) comporte un bâti (17). Le dispositif de ramassage et de déplacement (4) comporte également deux poutrelles (18). Ces poutrelles (18) portent la barre (16) du dispositif de guidage (14). Ainsi qu'il ressort de la figure 3, elles s'étendent vers l'arrière par-dessus l'organe de déplacement (6). Les poutrelles (18) sont reliées près de leurs extrémités arrière à des supports (19) reliés au bâti (17). Les poutrelles (18) sont de plus articulées au bâti (17) au moyen d'un dispositif de déplacement (20). Ce dispositif de déplacement (20) comporte notamment des axes (21) sensiblement parallèles à l'axe de rotation (9) du rotor (8). Ces axes (21) sont portés par les supports (19). Dans une configuration active des poutrelles (18) illustrée en particulier aux figures 1 et 3, et utilisée notamment en position de travail de la machine, ces axes (21) sont positionnés au-dessus de la partie arrière de l'organe de déplacement (6), et les poutrelles (18) sont éloignées de l'organe de ramassage (5) et de l'organe de déplacement (6) afin de ne pas gêner les déplacements des végétaux. Les poutrelles (18) peuvent pivoter vers le haut d'un certain angle autour de ces axes (21).

Le dispositif de déplacement (20) comporte en sus des butées (22) qui limitent l'angle de pivotement des poutrelles (18) autour de ces axes (21). Chacune de ces butées (22) est constituée par une tige (23) dont l'une des extrémités est articulée sur le bâti (17) et l'autre extrémité est engagée dans un fourreau (24) qui est articulé sur l'extrémité arrière d'une des poutrelles (18). L'extrémité engagée dans le fourreau (24) est pourvue d'un épaulement situé entre deux arrêts placés aux deux extrémités dudit fourreau (24). Lesdits arrêts limitent le débattement possible du fourreau (24) par rapport à l'épaulement de la tige (23) et par conséquent l'angle de pivotement des poutrelles (18) autour des axes (21). Entre la tige (23) et le fourreau (24) de chaque butée (22) est disposé un ressort de compression (25). Celui-ci exerce une pression sur le fourreau (24) correspondant qui tend à faire pivoter les poutrelles (18) et le dispositif de guidage (14) en direction de l'organe de ramassage (5) afin de maintenir le dispositif de guidage (14) en contact avec les végétaux déplacés. En sus, ce ressort (25) amortit les déplacements des poutrelles (18) autour des axes (21).

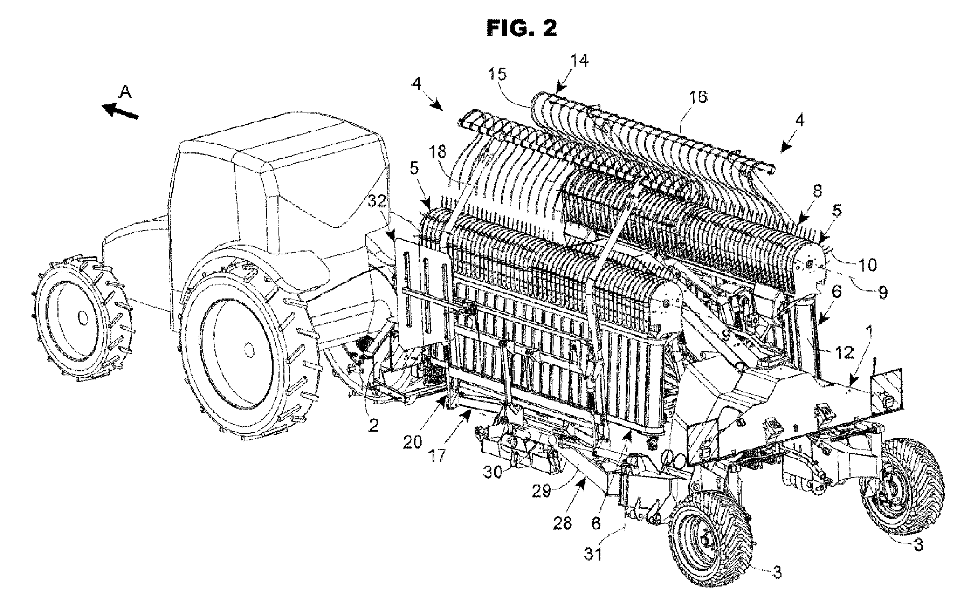

Le dispositif de déplacement comporte également des premiers axes (26) reliant les supports (19) des poutrelles (18) au bâti (17). Ces premiers axes (26) sont sensiblement parallèles à l'axe de rotation (9) du rotor (8). Ils sont situés à l'arrière de l'organe de déplacement (6). Les supports (19), et donc les poutrelles (18), peuvent être pivotés autour de ces premiers axes (26). Ces supports (19) forment ainsi avec les butées (22), les extrémités arrière des poutrelles (18) et des parties du bâti (17), des parallélogrammes déformables. La déformation de ces parallélogrammes induit un pivotement des poutrelles (18) autour des premiers axes (26) entre la configuration active des figures 1 et 3 et une configuration inactive des poutrelles (18) représentée à la figure 2. La configuration inactive est notamment utilisée en position de transport de la machine.

Dans la configuration inactive des poutrelles (18), ces dernières sont rabattues contre le convoyeur (12) de l'organe de déplacement (6) par pivotement des supports (19) autour des premiers axes (26) dans le sens horaire, vu depuis la droite du dispositif de ramassage et de déplacement (4) correspondant. Le dispositif de guidage (14) se situe alors sensiblement dans le prolongement de l'organe de ramassage (5), ainsi que cela est visible sur la figure 2. Sur cette figure, la paroi (13) n'est pas représentée pour les besoins de la clarté, mais on comprendra aisément que cette paroi (13) suit les mouvements des poutrelles (18) et des supports (19). En effet, la portion (13a) de la paroi (13) est articulée au bâti (17) autour d'axes (27) visibles sur la figure 3. Ces axes (27) sont placés immédiatement à l'arrière de l'organe de déplacement (6). La portion (13a) de la paroi (13) suit, par pivotement autour de ces axes (27), le mouvement des supports (19) autour des premiers axes (26). En sus, l'autre portion (13b) de la paroi (13) est tenue aux poutrelles (18) par des liens. De la sorte, lorsque les poutrelles (18) sont déplacées de leur configuration active vers leur configuration inactive de la figure 2, l'encombrement du dispositif de ramassage et de déplacement (4) dans une direction perpendiculaire à la surface transporteuse du convoyeur (12), est nettement réduit.

Le bâti (17) du dispositif de ramassage et de déplacement (4) est relié au châssis (1) de la machine par un dispositif de liaison (28). Celui-ci permet au dispositif de ramassage et de déplacement (4) d'être transposé entre une première orientation sensiblement horizontale (figure 1), utilisée notamment dans la position de travail de la machine, et une deuxième orientation dans laquelle il est replié vers le haut (figure 2). A cet effet, le dispositif de liaison (28) comporte notamment un bras de liaison (29) articulé au châssis (1) et au bâti (17) du dispositif de ramassage et de déplacement (4). Le dispositif de liaison (28) comporte également un axe (30) placé à l'arrière du bâti (17) et s'étendant sensiblement parallèlement à l'axe de rotation (9) du rotor (8). Le bras de liaison (29) est relié au bâti (17) par cet axe (30). Les poutrelles (18) étant placées dans la configuration inactive dans laquelle elles sont rabattues contre le convoyeur (12), le dispositif de ramassage et de déplacement (4) peut ensuite être transposé de la première orientation sensiblement horizontale, et qui est également sensiblement transversale (figure 1), vers une orientation sensiblement verticale et sensiblement transversale, par pivotement vers le haut autour de l'axe (30). L'angle de ce pivotement est par exemple voisin de 90°. Dans l'orientation sensiblement verticale et sensiblement transversale, les poutrelles (18) s'étendent sur l'arrière du dispositif de ramassage et de déplacement (4).Ensuite, par pivotement du bras de liaison (29) autour d'un axe (31) sensiblement vertical d'articulation au châssis (1), le dispositif de ramassage et de déplacement (4) est rabattu par exemple vers l'avant. Il se trouve alors dans la deuxième orientation sensiblement verticale et sensiblement dans la direction d'avancement (A), tel que visible à la figure 2. La largeur de la machine est ainsi réduite. Cette deuxième orientation est notamment utilisée dans la position de transport de la machine.

Les déplacements autour des axes (26, 30 et 31) sont opérés par des actionneurs, non représentés, tels que des vérins ou des moteurs, hydrauliques ou électriques par exemple. Ces actionneurs peuvent être commandés depuis le tracteur afin qu'ils effectuent les différents déplacements. Dans un but de clarté, la description qui précède se rapporte à des déplacements effectués les uns après les autres. Toutefois, ils peuvent aussi, du moins pour certains d'entre eux et/ou sur une partie de leurs plages de déplacement respectives, avoir lieu simultanément.

La machine selon l'invention peut comporter plusieurs dispositifs de ramassage et de déplacement(4) placés côte à côte, en vue d'augmenter sa largeur de travail. C'est ainsi que la machine illustrée à la figure 1 comporte deux dispositifs de ramassage et de déplacement (4) latéraux disposés de part et d'autre de la poutre centrale du châssis (1). Cette machine comporte en sus un dispositif de ramassage et de déplacement (4) central placé sous la poutre centrale du châssis (1). Au travail, ces trois dispositifs (4) peuvent par exemple être alignés de manière à ramasser une bande continue de fourrage au sol. Leurs organes de déplacement (6) respectifs sont alors animés dans le même sens de sorte à transférer les végétaux d'un organe de déplacement (6) vers l'organe de déplacement (6) voisin, pour finalement former un andain sur le côté gauche ou bien le côté droit de la machine. Il est aussi possible de travailler avec le dispositif de ramassage et de déplacement (4) central relevé en vue de former un seul andain central, ou bien un andain central et un andain latéral.

La machine selon l'invention comporte au moins un déflecteur (32) qui coopère avec l'un des dispositifs de ramassage et de déplacement (4) de manière à, pendant le travail, recevoir un flux de végétaux déplacés par le convoyeur (12) correspondant afin de former un andain. La machine selon l'exemple de réalisation illustré aux figures 1 et 2 comporte un premier déflecteur (32) qui coopère avec le dispositif de ramassage et de déplacement (4) gauche. Elle comporte également un deuxième déflecteur (32) qui coopère avec le dispositif de ramassage et de déplacement (4) droit. Le déflecteur (32) permet la formation d'un andain régulier et bien délimité. Lorsque les végétaux présents au sol sont ramassés par le rotor (8) en un flux irrégulier dû, par exemple, à des variations de densité ou de volume des végétaux repris par le rotor (8), la présence du déflecteur à côté de l'extrémité latérale (38) du convoyeur (12) permet à ces végétaux, après avoir été déplacés par le convoyeur (12), de retomber sur le sol en un andain dont la grande homogénéité facilite sa reprise ultérieure par une presse ou une ensileuse. Ces premier et deuxième déflecteurs (32), ainsi que leurs moyens de liaison respectifs aux dispositifs de ramassage et de déplacement (4) correspondants, sont sensiblement symétriques les uns des autres par rapport à la poutre centrale du châssis (1). Pour cette raison, la description qui suit s'adresse au déflecteur (32) droit, mais il est bien évident qu'elle concerne aussi le déflecteur (32) gauche, moyennant une inversion des qualificatifs « gauche » et « droit » employés dans cette description.

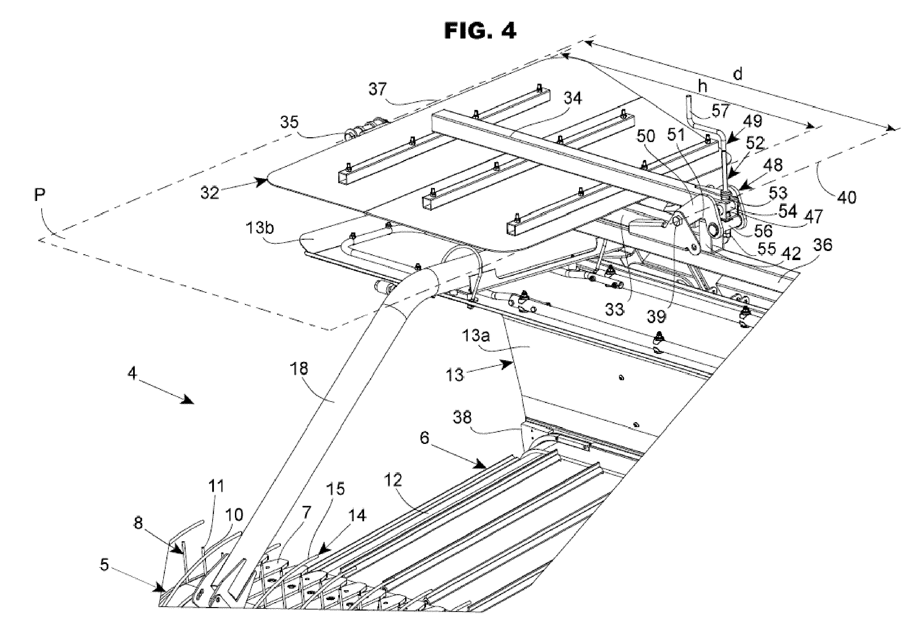

Tel qu'illustré notamment à la figure 3, le déflecteur (32) est relié à un bras (33). Le déflecteur (32) comporte une tôle ou une toile, de préférence sensiblement plane. Cette tôle ou toile est tenue et rigidifiée par des barrettes métalliques, par exemple horizontales, liées à un tube (34) porté par le bras (33).Ce bras (33) est lui-même relié, au moyen d'un premier dispositif d'articulation (58), au dispositif de ramassage et de déplacement (4), en l'occurrence à une poutrelle (18) du dispositif de ramassage et de déplacement (4). Sur cette figure, le bras (33) est porté par la poutrelle (18) droite, vu dans la direction d'avancement (A), par l'intermédiaire d'une structure (36) tubulaire liée aux poutrelles (18).Cette structure (36) s'étend au-dessus de l'organe de ramassage (5), notamment du rotor (8), et/ou au-dessus de l'organe de déplacement (6), notamment du convoyeur (12). Cette structure (36) porte le premier dispositif d'articulation (58). Le premier dispositif d'articulation (58) comporte un premier axe (35). Le premier dispositif d'articulation (58) comporte également un premier axe géométrique de pivotement (37) du bras (33) par rapport au dispositif de ramassage et de déplacement (4). Selon l'exemple de réalisation des figures, ce premier axe géométrique de pivotement (37) est concentrique au premier axe (35). De préférence, le premier axe géométrique de pivotement (37) est orienté, au moins dans la position de travail de la machine, sensiblement dans la direction d'avancement (A). Au moyen du premier dispositif d'articulation (58), le bras (33) peut être pivoté, par rapport au dispositif de ramassage et de déplacement (4), entre une première position et une deuxième position. Selon l'exemple de réalisation, le pivotement du bras (33), par rapport au dispositif de ramassage et de déplacement (4), entre la première position et la deuxième position, est effectué autour du premier axe (35). Dans la première position illustrée à la figure 3, le déflecteur (32) est disposé, dans la position de travail de la machine, à côté d'une extrémité latérale (38) du dispositif de ramassage et de déplacement (4) - sur cette figure, de l'extrémité latérale droite - et est distant de ladite extrémité latérale (38). L'extrémité latérale (38) du dispositif de ramassage et de déplacement (4) correspond à l'extrémité latérale du convoyeur (12). Cette première position du bras (33) est utilisée dans la position de travail de la machine. Dans la deuxième position du bras (33) représentée à la figure 4, et en considérant la machine dans la position de travail, le déflecteur (32) et le bras (33) s'étendent sensiblement à plat. De plus, ils s'étendent au moins partiellement au-dessus du dispositif de ramassage et de déplacement (4). Cette deuxième position du bras (33) peut être utilisée en position de travail de la machine, lorsque la présence du déflecteur (32) à côté du convoyeur (12) n'est pas nécessaire à la formation de l'andain, ou poserait un problème d'encombrement pour la machine évoluant dans un environnement étroit. Cette deuxième position du bras (33) peut également être utilisée lors des manoeuvres, par exemple lorsque le dispositif de ramassage et de déplacement (4) portant le déflecteur (32) est replié vers le haut, du moins partiellement, en vue de passer au-dessus d'un obstacle ou d'un andain déjà formé. Dans ce cas, le repliement du bras (33) dans la deuxième position permet de réduire nettement la largeur totale de la machine. En sus, la deuxième position du bras (33) présente un grand intérêt dans la position de transport de la machine. En effet, lorsque le dispositif de ramassage et de déplacement (4) s'étend sensiblement à l'horizontale, la deuxième position du bras (33) permet au bras (33) et au déflecteur (32) d'occuper un encombrement vertical réduit, à savoir très nettement inférieur à la hauteur totale du dispositif de ramassage et de déplacement (4). De la sorte, lorsque les dispositifs de ramassage et de déplacement (4) sont ensuite déplacés dans leur deuxième orientation de la figure 2, la largeur totale de la machine est réduite. Cet avantage est encore renforcé par le déplacement des poutrelles (18) dans leur configuration inactive où elles sont rabattues contre le convoyeur (12).

Ainsi qu'il ressort notamment de la figure 4, dans la deuxième position du bras (33), le déflecteur et le bras (33) s'étendent sensiblement dans un même plan (P). En considérant la machine dans la position de travail, ce plan (P) est sensiblement parallèle au sol.

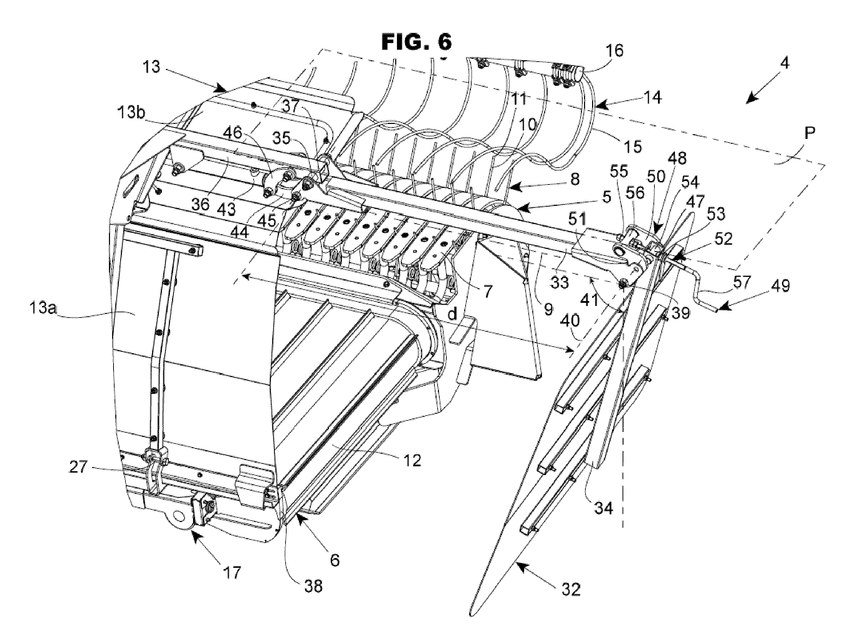

Le premier dispositif d'articulation (58) est disposé au voisinage de l'extrémité latérale (38) du dispositif de ramassage et de déplacement (4) correspondant. Notamment, le premier axe géométrique de pivotement (37) est placé, suivant une direction parallèle à l'axe de rotation (9) du rotor (8), sensiblement au niveau de ladite extrémité latérale (38). Ceci ressort en particulier de la figure 6. Dans la première position, le bras (33) s'étend donc sensiblement depuis ladite extrémité latérale (38) en direction du déflecteur (32). Egalement dans cette première position, le bras (33) s'étend de préférence sensiblement parallèlement à l'axe de rotation (9) du rotor (8).Dans la position de travail de la machine, le bras (33) dans la première position s'étend sensiblement parallèlement au sol.

Le bras (33) est articulé directement au dispositif de ramassage et de déplacement (4), en l'occurrence directement à la structure (36) portée par les poutrelles (18). Cette articulation directe du bras (33) au dispositif de ramassage et de déplacement (4) se fait au moyen du premier axe (35). Ainsi qu'il apparaît à l'examen des figures 3, 4 et 5, le premier axe (35) peut demeurer immobile par rapport au rotor (8) lorsque le bras (33) est déplacé entre la première position et la deuxième position.

Ainsi qu'il ressort d'une comparaison des figures 3 et 4, le bras (33) est, par rapport au dispositif de ramassage et de déplacement (4), pivoté entre la première position et la deuxième position, d'un angle voisin de 180° autour du premier axe (35). De la sorte, le bras (33) dans la deuxième position s'étend entre l'extrémité latérale (38) du dispositif de ramassage et de déplacement (4) et l'extrémité latérale opposée de ce même dispositif (4). En sus, le bras (33) s'étend sensiblement à plat et au-dessus de la structure (36) tubulaire à laquelle il est articulé.

Il ressort également des figures 3 et 4 qu'entre la première position et la deuxième position du bras (33), ce dernier est pivoté dans un plan transversal à la direction d'avancement (A). Dans l'exemple de réalisation des figures, ce plan transversal est en particulier sensiblement perpendiculaire à la direction d'avancement (A) de la machine. Il serait néanmoins envisageable que lorsque le dispositif de ramassage et de déplacement (4) s'étend sensiblement à l'horizontale, le premier axe géométrique de pivotement (37) du premier dispositif d'articulation (58) soit incliné par rapport à la direction d'avancement (A). Le bras (33) dans la première position s'étendrait alors quelque peu d'avant en arrière et pivoterait dans un plan transversal quelconque. Il serait également envisageable que le pivotement du bras (33) autour du premier axe géométrique de pivotement (37) soit combiné à un mouvement du dispositif de ramassage et de déplacement (4) entre les première et deuxième orientations et/ou à un déplacement des poutrelles (18) entre les configurations active et inactive.

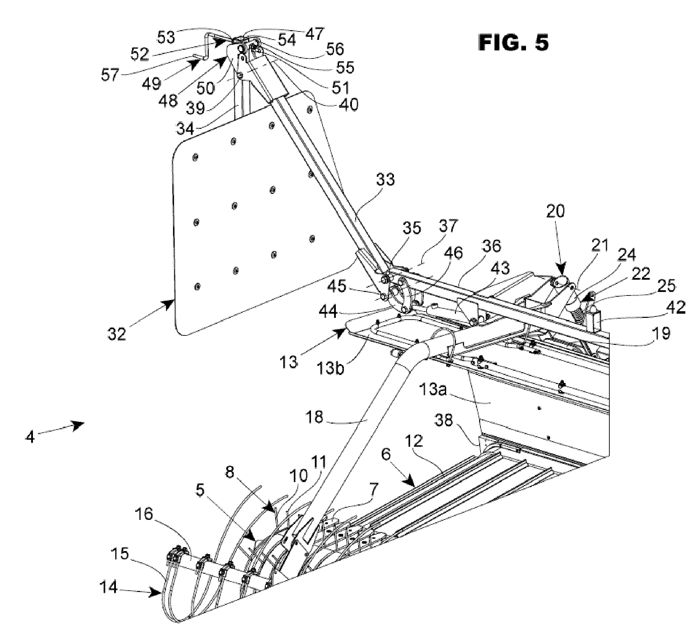

Il ressort notamment de la figure 5 que le bras (33) est de préférence pivoté vers le haut, autour du premier axe (35), de la première position vers la deuxième position.

Outre le premier dispositif d'articulation (58), la machine selon l'invention comporte un deuxième dispositif d'articulation (59) reliant le déflecteur (32) au bras (33). Ce deuxième dispositif d'articulation (59) comporte un deuxième axe géométrique de pivotement (40). Celui-ci est orienté, du moins dans la position de travail de la machine, sensiblement dans la direction d'avancement (A). Le deuxième dispositif d'articulation (59) comporte également un deuxième axe (39). Selon l'exemple de réalisation des figures, le deuxième axe géométrique de pivotement (40) est concentrique au deuxième axe (39).

Le deuxième dispositif d'articulation (59) comporte une plage angulaire de pivotement (41) au sein de laquelle le déflecteur (32) peut être replié contre le bras (33) de manière à ce que le déflecteur (32) s'étende sensiblement parallèlement au bras (33). Telle que visible à la figure 3, cette plage angulaire de pivotement (41) est voisine de 90°. En effet, le déflecteur (32) peut s'étendre, dans la première position du bras (33), entre une position sensiblement verticale et une position sensiblement horizontale dans laquelle le déflecteur (32) est en butée contre le bras (33). De plus, dans la deuxième position du bras (33) de la figure 4, le déflecteur (32) repose sur le bras (33), sensiblement parallèlement à ce dernier.

L'invention prévoit avantageusement qu'au moins dans la première position du bras (33), le déflecteur (32) puisse pivoter autour du deuxième axe (39) du deuxième dispositif d'articulation (59), vers le haut et vers l'extrémité latérale (38) du dispositif de ramassage et de déplacement (4), en direction du bras (33).

De plus, il est prévu qu'au sein de la plage angulaire de pivotement (41) décrite précédemment, le déflecteur (32) puisse pivoter librement autour du deuxième axe (39). Par « librement », on entend notamment que le déflecteur (32) peut, lorsqu'il rencontre un obstacle, pivoter en direction du bras (33) de manière à s'escamoter partiellement vis-à-vis de l'obstacle. De plus, lorsque le bras (33) est pivoté vers le haut depuis la première position, le déflecteur (32) pivote autour du deuxième axe (39) sous la seule action de la pesanteur, tel que cela apparaît à la figure 5.

De façon avantageuse, l'invention prévoit donc que le déflecteur (32) vienne en appui contre le bras (33), de manière à s'étendre sensiblement parallèlement au bras (33), par libre pivotement autour du deuxième axe (39), lorsque le bras (33) est pivoté vers le haut de la première position vers une position située au-delà de la verticale. Cet agencement est économiquement avantageux, puisque des moyens tels qu'un vérin ou un moteur sont superflus pour rabattre le déflecteur (32) contre le bras (33) par pivotement autour du deuxième axe (39).

Dans la deuxième position du bras (33) illustrée à la figure 4, et en considérant la machine dans la position de travail, le déflecteur (42) repose sur un appui (42) du dispositif de ramassage et de déplacement (4). Cet appui (42) comporte par exemple par un tampon en matériau élastomère. Cet appui (42) est solidaire de la structure (36) tubulaire qui s'étend au-dessus des poutrelles (18). De préférence, cet appui (42) est placé, par rapport au plan (P), sensiblement à même hauteur que le premier axe (35).Ceci permet au bras (33) et au déflecteur (32) de s'étendre sensiblement à plat et au moins partiellement au-dessus du dispositif de ramassage et de déplacement (4), et d'occuper un encombrement vertical nettement inférieur à la hauteur dudit dispositif de ramassage et de déplacement (4).

Ainsi qu'il ressort de la figure 3, l'invention prévoit avantageusement qu'une distance (d) séparant les premier et deuxième axes (35 et 39) soit supérieure ou égale à une hauteur (h) du déflecteur (32) placé dans une position rapprochée de la verticale. Ainsi, on évite en particulier que le déflecteur (32) ne dépasse de l'extrémité latérale (38) du dispositif de ramassage et de déplacement (4) lorsque le bras (33) est placé dans la deuxième position de la figure 4.

Ainsi qu'il ressort des figures 3 et 5, le bras (33) est pivoté autour du premier axe (35) au moyen d'un vérin (43). Ce vérin (43) est à double effet. Il est hydraulique dans l'exemple de réalisation des figures, mais peut aussi être électrique ou pneumatique. Dans le cadre de l'invention, il peut être prévu que le vérin (43) soit actionné en même temps que l'un ou l'autre des actionneurs prévus pour effectuer les déplacements des poutrelles (18) autour des premiers axes (26) et/ou des dispositifs de ramassage et de déplacement (4) autour des axes (30 et 31).

Le vérin (43) est articulé, à l'une de ses extrémités, au dispositif de ramassage et de déplacement (4), à savoir à la structure (36) tubulaire. A son autre extrémité, le vérin (43) est articulé à un levier esclave (44) relié au bras (33) au moyen d'une troisième articulation (45) décalée par rapport au premier axe (35). Par ailleurs, une biellette (46) est articulée entre le levier esclave (44) et le dispositif de ramassage et de déplacement (4), à savoir la structure (36) tubulaire de ce dernier. Cet agencement est d'un encombrement réduit. Il autorise un pivotement de grande amplitude du bras (33) autour du premier axe (35) au moyen d'un vérin (43) de faible longueur. De plus, l'effort exercé par le vérin (43) est multiplié par ledit agencement, d'où l'emploi d'un vérin (43) de section réduite. Enfin, une droite passant par les articulations du vérin ne croise jamais le premier axe(35), ce qui évite tout risque de blocage du bras (33) dans une position intermédiaire entre les première et deuxième positions.

Une fois le bras (33) pivoté dans la deuxième position, il demeure maintenu dans cette position par le vérin (43) double effet. En sus, ainsi qu'il ressort de la figure 4, le déflecteur (32) repose sur l'appui (42) du dispositif de ramassage et de déplacement (4) au moyen d'une extrémité supérieure (47) du tube (34) du déflecteur (32). Cette extrémité supérieure (47) dépasse quelque peu le deuxième axe (39). Ainsi, dans la deuxième position du bras (33), le déflecteur (32) ne peut pas pivoter autour du deuxième axe (39). Cet agencement évite notamment qu'au cours des manoeuvres ou du transport de la machine, le déflecteur (32) ne vienne se balancer de manière intempestive.

Dans la première position du bras (33) de la figure 3, le déflecteur (32) est, par son poids propre, en appui contre le bras (33) par l'intermédiaire d'un moyen de butée (48) placé entre le déflecteur (32) et le bras (33).

Outre le moyen de butée (48) est prévu un moyen de réglage (49) de la position pivotée du déflecteur (32) par rapport au bras (33), autour du deuxième axe (39). Ce moyen de réglage (49) est placé de manière opérationnelle entre le déflecteur (32) et le bras (33).

Ainsi qu'il apparaît plus en détail à la figure 6, le moyen de butée (48) comporte un levier (50) articulé au bras (33) au voisinage du deuxième axe (39). Le deuxième axe (39) est en l'occurrence commun au déflecteur (32) et au levier (50). Ce levier (50) est relié au déflecteur (32) par l'intermédiaire du moyen de réglage (49). De plus, le levier (50) comporte une face (51) conçue pour être en appui contre l'extrémité du bras (33) voisine du deuxième axe (39) lorsque le bras (33) se trouve dans la première position. Dans ce cas, le déflecteur (32) peut notamment s'étendre dans une position sensiblement verticale. En sus, il apparaît sur la figure 6 que le moyen de réglage (49) permet d'orienter le déflecteur (32) dans une position partiellement repliée en direction du bras (33) lorsque ce dernier s'étend dans la première position. A cet effet, le moyen de réglage (49) comporte notamment un arbre (52). Ce dernier est en liaison hélicoïdale avec l'extrémité supérieure (47) du tube (34) du déflecteur (32). L'arbre (52) comporte une partie filetée (53) qui coopère avec un axe taraudé (54) relié à ladite extrémité supérieure (47) du tube (34). La liaison hélicoïdale est orientée perpendiculairement au deuxième axe géométrique de pivotement (40) du deuxième dispositif d'articulation (59). La partie filetée (53) de l'arbre (52) comporte une autre extrémité (55) qui coopère avec le bras (33) ou le levier (50). Dans l'exemple de réalisation des figures, cette autre extrémité (55) traverse un axe (56) porté par le levier (50). De plus, cette autre extrémité (55) porte deux paires d'écrous placées de part et d'autre dudit axe (56). L'autre extrémité (55) de la partie filetée (53) est donc en liaison pivot avec l'axe (56). De la sorte, une rotation de l'arbre (52) entraîne un déplacement du déflecteur (32) par rapport au levier (50), par pivotement du déflecteur (32) autour du deuxième axe (39). Etant donné que dans la première position du bras (33), le levier (50) est en appui contre ce celui-ci au niveau de la face (51), la rotation de l'arbre (52) implique un pivotement du déflecteur (32) en direction du bras (33) autour du deuxième axe (39).Un effet identique pourrait aussi être obtenu dans le cas où l'autre extrémité (55) de l'arbre (52) coopérerait directement avec le bras (33). Le déflecteur (32) est ainsi placé dans une position plus proche de l'extrémité latérale (38) du dispositif de ramassage et de déplacement (4). Un tel réglage permet d'adapter la largeur de l'andain formé par la machine selon l'invention aux conditions de fourrage ramassé et aux paramètres d'une autre machine devant reprendre ultérieurement l'andain formé. Dans l'exemple de réalisation des figures, l'arbre (52) est solidaire d'une manivelle (57). Celle-ci permet à l'utilisateur de la machine d'opérer manuellement la rotation de l'arbre (52). Il serait aussi envisageable de relier l'arbre (52) à un moyen de commande à distance, tel qu'un moteur hydraulique ou électrique, afin de piloter la position du déflecteur (32) depuis une centrale de commande placée sur la machine ou à demeure sur le tracteur.

Il est bien évident que l'invention n'est pas limitée à l'exemple de réalisation décrit ci-dessus et représenté sur les figures annexées. Des modifications restent possibles, notamment en ce qui concerne la constitution ou le nombre des divers éléments ou par substitution d'équivalents techniques, sans pour autant sortir du domaine de protection.

## Revendications

1. Machine de fenaison comportant au moins un dispositif de ramassage et de déplacement (4) de végétaux comportant un rotor (8) pouvant être animé autour d'un axe de rotation (9) sensiblement horizontal et sensiblement perpendiculaire à une direction d'avancement (A) de la machine en position de travail, des dents (10) avec des pointes de dents (11) décrivant une enveloppe courbe lorsque le rotor (8) est animé autour dudit axe de rotation (9), et un convoyeur (12) qui déplace les végétaux transversalement à la direction d'avancement (A), **caractérisée en ce que** la machine comporte au moins un déflecteur (32) qui coopère avec le dispositif de ramassage et de déplacement (4) de manière à, pendant le travail, recevoir un flux de végétaux déplacés par le convoyeur (12) afin de former un andain, que le déflecteur (32) est relié à un bras (33) lui-même relié, au moyen d'un premier dispositif d'articulation (58),au dispositif de ramassage et de déplacement (4), au moyen duquel premier dispositif d'articulation (58) le bras (33) peut être pivoté, par rapport au dispositif de ramassage et de déplacement (4), entre une première position dans laquelle le déflecteur (32) est disposé, dans la position de travail de la machine, à côté d'une extrémité latérale (38) du dispositif de ramassage et de déplacement (4) et est distant de ladite extrémité latérale (38), et une deuxième position dans laquelle, en considérant la machine en position de travail, le déflecteur (32) et le bras (33) s'étendent sensiblement à plat et au moins partiellement au-dessus du dispositif de ramassage et de déplacement (4).

2. Machine de fenaison selon la revendication 1, **caractérisée en ce que** dans la deuxième position du bras (33), le déflecteur (32) et le bras (33) s'étendent sensiblement dans un même plan (P) qui, en considérant la machine dans la position de travail, est sensiblement parallèle au sol.

3. Machine de fenaison selon la revendication 1 ou 2, **caractérisée en ce que** le premier dispositif d'articulation (58) comporte un premier axe (35) au moyen duquel le bras (33) est articulé directement au dispositif de ramassage et de déplacement (4), et que le premier axe (35) peut demeurer immobile par rapport au rotor (8) lorsque le bras (33) est déplacé entre la première position et la deuxième position.

4. Machine de fenaison selon l'une quelconque des revendications 1 à 3, **caractérisée en ce que** le premier dispositif d'articulation (58) comporte un premier axe (35) autour duquel le bras (33) est, par rapport au dispositif de ramassage et de déplacement (4), pivoté entre la première position et la deuxième position d'un angle voisin de 180°.

5. Machine de fenaison selon l'une quelconque des revendications 1 à 4, **caractérisée en ce qu'**entre la première position et la deuxième position du bras (33), le bras (33) est pivoté dans un plan transversal à la direction d'avancement (A).

6. Machine de fenaison selon l'une quelconque des revendications 1 à 5, **caractérisée en ce que** le premier dispositif d'articulation (58) comporte un premier axe (35) autour duquel le bras (33) est, de la première position vers la deuxième position, pivoté vers le haut.

7. Machine de fenaison selon l'une quelconque des revendications 1 à 6, **caractérisée en ce que** le déflecteur (32) est relié au bras (33) au moyen d'un deuxième dispositif d'articulation (59).

8. Machine de fenaison selon la revendication 7, **caractérisée en ce que** le deuxième dispositif d'articulation (59) comporte une plage angulaire de pivotement (41) au sein de laquelle le déflecteur (32) peut être replié contre le bras (33) de manière à s'étendre sensiblement parallèlement au bras (33).

9. Machine de fenaison la revendication 7, **caractérisée en ce qu'**au moins dans la première position du bras (33), le déflecteur (32) peut pivoter autour d'un deuxième axe (39) du deuxième dispositif d'articulation (59), vers le haut et vers l'extrémité latérale (38), en direction du bras (33).

10. Machine de fenaison la revendication 8, **caractérisée en ce qu'**au sein de la plage angulaire de pivotement (41), le déflecteur (32) peut librement pivoter autour du deuxième axe (39).

11. Machine de fenaison selon la revendication 7, **caractérisée en ce que** le déflecteur (32) vient en appui contre le bras (33), de manière à s'étendre sensiblement parallèlement au bras (33), par libre pivotement autour d'un deuxième axe (39) du deuxième dispositif d'articulation (59), lorsque le bras (33) est pivoté vers le haut de la première position vers une position située au-delà de la verticale.

12. Machine de fenaison selon la revendication 2, **caractérisée en ce que** le premier dispositif d'articulation (58) comporte un premier axe (35) autour duquel le bras (33) peut pivoter par rapport au dispositif de ramassage et de déplacement (4), et que, dans la deuxième position du bras (33) et en considérant la machine dans la position de travail, le déflecteur (32) repose sur un appui (42) du dispositif de ramassage et de déplacement (4) placé, par rapport au plan (P), sensiblement à même hauteur que le premier axe (35).

13. Machine de fenaison selon la revendication 7, **caractérisée en ce que** les premier et deuxième dispositifs d'articulation (35 et 39) comportent des axes géométriques de pivotement (37 et 40) orientés, au moins dans la position de travail de la machine, sensiblement dans la direction d'avancement (A).

14. Machine de fenaison selon l'une quelconque des revendications 1 à 13, **caractérisée en ce que** le premier dispositif d'articulation (58) comporte un premier axe (35) autour duquel le bras (33) peut pivoter par rapport au dispositif de ramassage et de déplacement (4), et que le bras (33) est pivoté autour du premier axe (35) au moyen d'un vérin (43) articulé au dispositif de ramassage et de déplacement (4) et à un levier esclave (44) relié au bras (33) au moyen d'une troisième articulation (45) décalée par rapport au premier axe (35), et qu'en sus, une biellette (46) est articulée entre le levier esclave (44) et le dispositif de ramassage et de déplacement (4).

15. Machine de fenaison selon l'une quelconque des revendications 1 à 14, **caractérisée en ce que** dans la première position du bras (33), le déflecteur (32) est, par son poids propre, en appui contre le bras (33) par l'intermédiaire d'un moyen de butée (48) placé entre le déflecteur (32) et le bras (33).

16. Machine de fenaison selon la revendication 7, **caractérisée en ce qu'**un moyen de réglage (49) de la position pivotée du déflecteur (32) par rapport au bras (33), autour d'un deuxième axe (39) du deuxième dispositif d'articulation (59), est placé de manière opérationnelle entre le déflecteur (32) et le bras (33).

17. Machine de fenaison selon l'une quelconque des revendications 1 à 16, **caractérisée en ce que** le dispositif de ramassage et de déplacement (4) comporte un bâti (17) et au moins une poutrelle (18) portant le bras (33) relié au déflecteur (32), que la poutrelle (18) est articulée au bâti (17) au moyen d'un dispositif de déplacement (20) comportant au moins un premier axe (26) sensiblement parallèle à l'axe de rotation (9) du rotor (8), autour duquel premier axe (26) la poutrelle (18) peut être pivotée entre une configuration active et une configuration inactive dans laquelle la poutrelle (18) est rabattue contre le convoyeur (12).

18. Machine de fenaison selon l'une quelconque des revendications 1 à 17, **caractérisée en ce qu'**un (le) bâti (17) du dispositif de ramassage et de déplacement (4) est relié à un châssis (1) de la machine par un dispositif de liaison (28) au moyen duquel le dispositif de ramassage et de déplacement (4) peut être transposé entre une première orientation sensiblement horizontale et une deuxième orientation dans laquelle il est replié vers le haut.
